# EUROPÄISCHE PATENTANMELDUNG

(11) **EP 0 803 761 A1**
(43) Veröffentlichungstag der Anmeldung: **29.10.1997**
(21) Anmeldenummer: 96106583.6
(22) Anmeldetag: 26.04.1996
(51) Int. Cl.: G03B 27/58

(54) **Lichtundurchlässige Spule**

(71) Anmelder: Typon Holding AG, 3400 Burgdorf (CH)
(72) Erfinder: Uetz, Peter, 3400 Burgdorf (CH)
(74) Vertreter: Blum, Rudolf Emil Ernst

(57) **Zusammenfassung**

Die Spule weist einen lichtundurchlässigen Spulenkern (2) auf, auf welchem das lichtempfindliche Material (11) aufgewickelt ist. Seitenflansche (3, 4) aus lichtundurchlässigem Material sind mit den Stirnseiten des Spulenkerns (2) stoffschlüssig verbunden. Weiter enthält die Spule einen lichtundurchlässigen Umhüllungsteil (5), der das lichtempfindliche Material (11) umgibt. Flexible Verschlussbänder (6, 7) aus lichtundurchlässigem Material sind in elastisch gedehntem Zustand an den Kantenbereichen auf dem Umhüllungsteil (5) und den Seiten-. flanschen (3, 4) angebracht. Der Aussendurchmesser der kreisringförmigen Flansche (3, 4) ist einwenig kleiner als der Aussendurchmesser des aufgewickelten lichtempfindlichen Materials (11). Der Innendurchmesser der Flansche (3, 4) ist minimal grösser als der nach der ISO-Norm zugelassene obere Toleranzwert für den Innendurchmesser des Spulenkerns. Auf den Seitenflanschen (3, 4) sind Seitenringe (21, 22) angeordnet, die die Verschlussbänder (6, 7) teilweise überlappen, um ein seitliches Ausweichen derselben aufgrund einer seitlichen Verschiebung der obenstehenden Windungen des lichtempfindlichen Materials (11) zu verhindern.

## Beschreibung

Die Erfindung betrifft eine lichtundurchlässige Spule mit einem lichtundurchlässigen Spulenkern und beidseits desselben angeordnete Seitenflansche, auf welchem Spulenkern eine lichtempfindliche Materialbahn aufgewickelt ist, mit einem lichtundurchlässigen Umhüllungsteil, dessen Breitenmass mindestens annähernd gleich dem Breitenmass der Materialbahn ist, die Materialbahn umhüllt und bei einem Endbereich mit der lichtempfindlichen Materialbahn verbunden ist, mit lichtundurchlässigen Verschlussbändern aus einem flexiblen Material, die jeweils eine lichtundurchlässige Ueberbrückung zwischen einem der Seitenflansche und dem Umhüllungsteil bilden, wobei jedes Verschlussband bei einem ersten Teilbereich in einem elastisch gedehnten Zustand lichtdicht auf dem Umhüllungsteil aufliegt und nicht abreissbar mit demselben verbunden ist und bei einem zweiten Teilbereich auf einem der Seitenflansche lichtdicht aufliegt, und ein Verfahren zur Herstellung.

Lichtundurchlässig verpackte Spulen mit lichtempfindlichem Material, die sich für das Laden von Geräten bei Tageslicht eignen, sind in einer Anzahl von Ausführungen bereits bekannt. Das Laden bzw. Einsetzen von Filmen oder lichtempfindlichen Papieren muss in den Räumen erfolgen können, in denen die betreffenden Geräte aufgestellt sind oder gebraucht werden, weshalb man auch von Raumlichtladungsverpackungen für lichtempfindliche Materialien spricht. Die gängigen Verpackungen dieser Art haben den Nachteil, dass die verwendeten Seitenflansche die Spule seitlich oder im Durchmesser überragen und deshalb in der Filmkassette streifen, wodurch das Abspulen des lichtempfindlichen Materiales behindert wird, dass ferner beim Abziehen des lichtundurchlässigen Umhüllungsteiles vielfach losgerissene Teile der Verpackung in den Filmkassetten zurückbleiben und diese verschmutzen oder sogar Störungen verursachen, und dass der Anfang des Umhüllungsteils oft nur unbequem in den Auslass- bzw. Führungsschlitz der Filmkassette einzuführen und nur mit Mühe hindurchzuziehen ist.

Die EP-A-0 599 001 zeigt eine lichtundurchlässige Spule, bei welcher die beiden vorzugsweise aus Polyäthylen bestehenden Seitenflansche an den Stirnseiten der Spule angebracht sind und im Bereich des Spulenkerns zu diesem hin abgekröpft sind. Diese Abkröpfung wird unter anderem mittels Aufpressen oder thermischer Verformung erreicht. Dabei besteht aber die Gefahr, dass sich die abgekröpften Abschnitte nicht immer einwandfrei an die Innenseite der Spule anlegen, und dass diese Abschnitte bei ihren Enden, die eine Schulter an der Innenseite des Spulenkerns bilden, durch einen in den Spulenkern eingeschobenen Gegenstand, z.B. einen Träger oder eine Welle aufgerissen werden.

Aufgabe der Erfindung ist es, eine lichtundurchlässige Spule zu schaffen, die die erwähnten Nachteile nicht aufweist und einfach herzustellen ist.

Diese Aufgabe wird durch die Merkmale des unabhängigen Patentanspruchs 1 gelöst. Vorteilhafte Weiterbildungen der Erfindung ergeben sich aus den abhängigen Ansprüchen.

Dadurch, dass die Seitenflanschen mit den Stirnseiten des Spulenkerns in einer Art stumpfen Verbindung verbunden sind, gibt es keine beim Innenmantel des Spulenkerns hervorstehende Vorsprünge oder Schultern, mit denen sich in den Spulenkern hineingeschobene Gegenstände, z.B. Träger verfangen können und weiter sind beim Innenumfangsbereich der ringförmigen Seitenflansche keine Umbiegungen notwendig.

Ein Ausführungsbeispiel der Erfindung wird nachstehend anhand der Zeichnungen näher erläutert. Es zeigen:
Figur 1 eine lichtundurchlässige Spule,
Figur 2 einen Teilquerschnitt durch die lichtundurchlässige Spule nach Figur 1,
Figur 3 eine Teilansicht der lichtundurchlässigen Spule,
Figur 4 einen Teilquerschnitt durch den Umhüllungsteil der lichtundurchlässigen Spule,

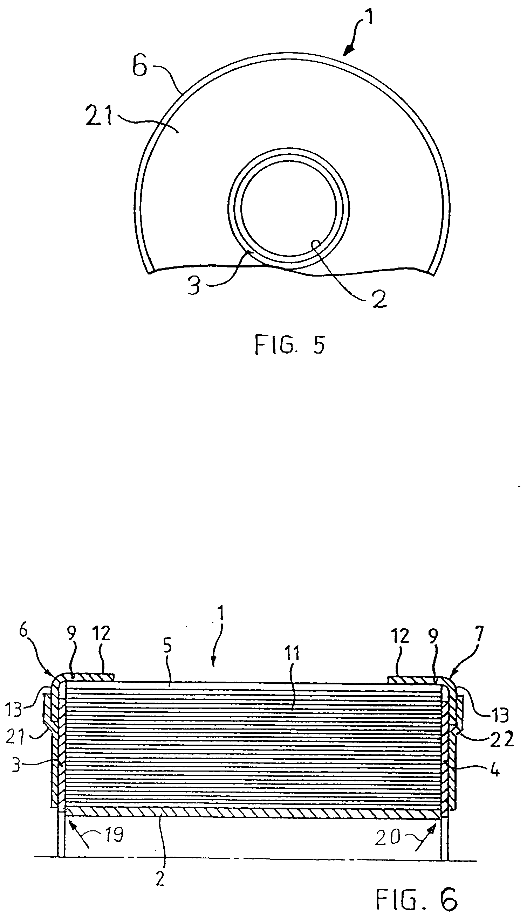

Figur 5 eine Stirnansicht einer zweiten Ausführung der lichtundurchlässigen Spule, und
Figur 6 einen Schnitt ähnlich dem der Figur 2 durch die zweite Ausführung der lichtundurchlässigen Spule.

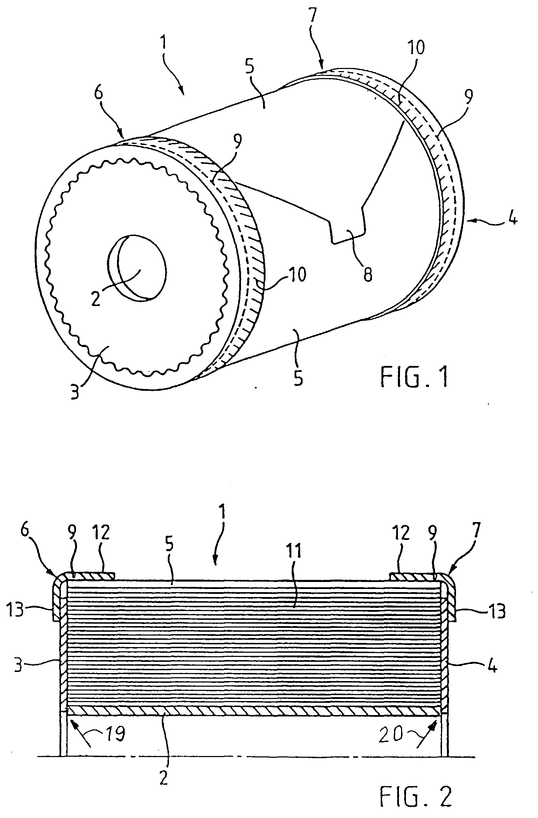

Figur 1 zeigt eine lichtundurchlässige Spule 1 mit lichtempfindlichem Material, mit einem lichtundurchlässigen Spulenkern 2, beidseitig an den Stirnseiten der Spule 1 angebrachten, ringförmigen, lichtundurchlässigen Seitenflanschen 3 und 4, einem lichtundurchlässigen Umhüllungsteil 5, der eine Ummantelung für das lichtempfindliche Material bildet und ebenfalls lichtundurchlässigen, elastisch dehnbaren Verschlussbändern 6 und 7, die beidseits die Ummantelung lichtundurchlässig mit den Seitenflanschen 3, 4 verbinden und so eine lichtundurchlässige Ueberbrückung bilden. Der Umhüllungsteil 5 weist eine Lasche 8 auf, mit deren Hilfe die lichtdurchlässige Ummantelung aufgerissen und der Umhüllungsteil 5 abgezogen werden kann.

Die Verschlussbänder 6,7 können in Umfangsrichtung verlaufende, als Sollreissstellen wirkende Schwächungslinien 9 aufweisen, sowie eine Vielzahl von weiteren Schwächungslinien 10, die schräg zur Umfangsrichtung verlaufen und die den Beginn des Abziehens des Umhüllungsteiles 5 von der Spule erleichtern. Figur 1 zeigt Schwächungslinien 9, die auf dem Umhüllungsteil 5 liegen, es können aber ebensogut auch Lösungen verwendet werden, bei denen die Schwächungslinien 9 auf den Seitenflanschen 3, 4 liegen (nicht dargestellt). Schwächungslinien dieser Art können beispielsweise Perforationen, Schlitze, Einkerbungen oder dergleichen sein. Die Verschlussbänder 6, 7 sind ausserdem vorzugsweise mit einer Selbstklebeschicht versehen.

Ein Teilquerschnitt gemäss Figur 2 zeigt den Aufbau der Spule 1. Lichtempfindliches Material 11 ist auf dem Spulenkern 2 aufgespult. Die Seitenflansche 3, 4 bestehen aus lichtdichter Pappe, z.B. mit einer maximalen Dicke von 0,5 mm, und weisen die Form eines Kreisringes auf. Beim Bereich ihres Innenumfanges sind sie mittels einem Klebstoff, vorteilhaft einem Hotmelt-Kleber, mit den jeweiligen Stirnseiten des Spulenkerns 2 im Sinne einer stumpfen Verbindung verbunden, wie dies in Figur 2 durch die Pfeile 19 und 20 gezeigt ist. Aussen können die Seitenflansche 3, 4 eine Folien- oder Lackbeschichtung aufweisen. Der Aussendurchmesser der Seitenflansche 3, 4 ist unwesentlich kleiner als der Durchmesser des aufgewickelten lichtempfindlichen Materials, also der Filmspule. Der Innendurchmesser der ringförmigen Seitenflansche 3, 4 ist minimal grösser als der nach der ISO-Norm Zugelassene obere Toleranzwert für den Kerninnendurchmesser. Damit ist sichergestellt, dass auch bei kleinen Ungenauigkeiten der Lage der ringförmigen Seitenflansche 3, 4 diese weder aussen noch innen hervorstehen. Die Seitenflansche 3, 4 werden stirnseitig mittels Hitze und Druck auf den Spulenkern aufgeschweisst, bzw. aufgesiegelt.

Der Umhüllungsteil 5, der die lichtundurchlässige Ummantelung der Spule 1 bildet, hat im wesentlichen die gleiche Breite wie das aufgewickelte lichtempfindliche Material. Die Verschlussbänder 6, 7 sind im Kantenbereich der Spule 1 zwischen dem Umhüllungsteil 5 und den Seitenflanschen 3, 4 angebracht und bewirken eine vollständige lichtundurchlässige Abdichtung. Jedes der Verschlussbänder 6, 7 ist in zwei Teilbereiche aufgeteilt, von denen ein erster Teilbereich 12 im wesentlichen auf dem Umhüllungsteil 5 und ein zweiter Teilbereich 13 im wesentlichen auf dem jeweiligen Seitenflansch 3, 4 aufliegt. Dabei ist der erste Teilbereich 12 des jeweiligen Verschlussbandes 6, 7 jeweils in gedehntem Zustand nicht abreissbar mit dem Umhüllungsteil 5 verbunden. Der zweite Teilbereich 13 des jeweiligen Verschlussbandes 6, 7 kann mit dem jeweiligen Seitenflansch 3, 4 verbunden sein, beispielsweise mittels einer Klebeverbindung. Es genügt aber auch, wenn der zweite Teilbereich unter Ausnützung von Adhäsionskräften lichtundurchlässig auf dem Seitenflansch aufliegt. Um die Faltenbildung im zweiten Teilbereich 13 zu verhindern oder mindestens sehr gering zu halten, wird der zweite Teilbereich 13 möglichst klein gehalten. Es hat sich gezeigt, dass eine vollständige Ueberlappung im Bereich von 3 bis 6 mm der Verschlussbänder 6, 7 mit den Seitenflanschen 3, 4 zur Bildung der zweiten Teilbereiche 13 selbst bei grossen Spulen (Durchmesser im Bereich von 10 cm) genügt.

Werden Schwächungslinien 9 verwendet, so ist der zweite Teilbereich 13 nicht abreissbar mit dem jeweiligen Seitenflansch 3, 4 verbunden, beispielsweise mit einer Klebeverbindung. Der erste und der zweite Teilbereich 12, 13 des jeweiligen Verschlussbandes 6, 7 sind entlang der jeweiligen Schwächungslinie 9 voneinander trennbar, wenn der Umhüllungsteil 5 mit Hilfe der Lasche 8 von der Spule 1 abgezogen wird. Die Schwächungslinien 9 sind an den Verschlussbändern 6, 7 jeweils so angebracht, dass sie bereits entweder auf dem Umhüllungsteil 5 oder auf den Seitenflanschen (3, 4) in der Nähe des Randes liegen.

Die Verschlussbänder 6, 7 sind vorzugsweise lichtundurchlässige Polyäthylenbänder, deren Haftfähigkeit im Bereich von 7-8 g/mm² liegt.

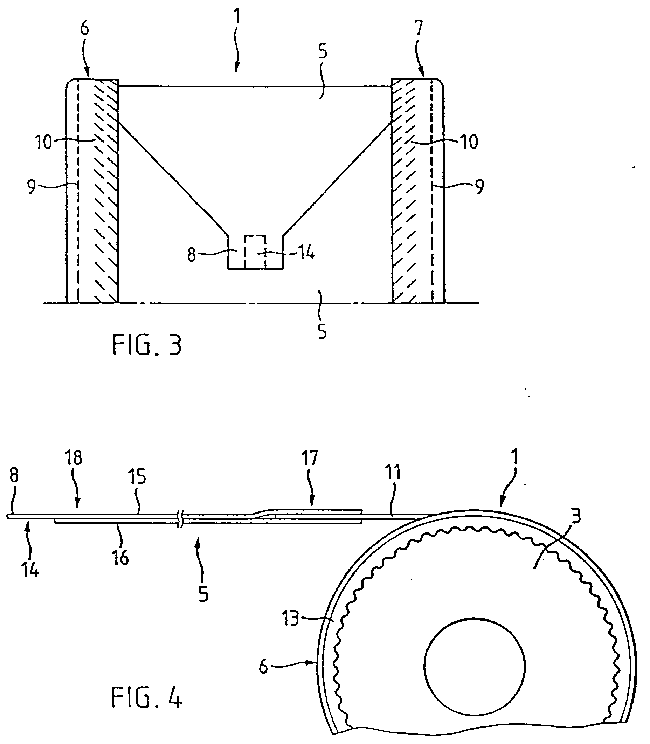

Figur 3 zeigt die Anordnung der Verschlussbänder 6, 7 an einem Ausführungsbeispiel (vergleiche auch Fig. 1 und 2), das mit Schwächungslinien 9 auf dem Umhüllungsteil 5 versehen ist. Dabei verlaufen die Schwächungslinien 9 im Randbereich auf dem Umhüllungsteil 5 in Umfangsrichtung. Die weiteren Schwächungslinien 10 verlaufen schräg zu den Schwächungslinien 9 in die Richtung, in die der Umhüllungsteil 5 mit Hilfe der Lasche 8 abgezogen wird, reichen allerdings nicht ganz bis zu den Schwächungslinien 9. Bei Ausführungsbeispielen, die keine Schwächungslinien verwenden (nicht dargestellt), sind die Verschlussbänder 6, 7 genau gleich angebracht, es sollte dann allerdings vorteilhaft darauf geachtet werden, dass die Enden der Verschlussbänder 6, 7 im Bereich der Lasche 8 liegen, damit das Abziehen des Umhüllungsteiles 5 nicht erschwert wird.

Der Umhüllungsteil 5 ist so lang, dass er sich selbst auf dem Umfang der Spule 1 zu überdecken vermag und ist im Bereich der Lasche 8 mit einer Klebestelle, die als Freilassbereich 14 ausgestaltet ist, versehen (siehe dazu auch Figur 4). An der Klebestelle wird der Umhüllungsteil 5 auf sich selber befestigt.

Figur 4 zeigt den Umhüllungsteil 5 und dessen Verbindung mit dem lichtempfindlichen Material 11 der Spule 1 im Detail. Der Umhüllungsteil ist ein Schichtverbund aus einer äusseren und einer inneren Schicht 15, 16, die aneinander haften und zwischen denen in einem Endbereich 17 das lichtempfindliche Material 11 befestigt ist. Die äussere Schicht 15 besteht vorzugsweise aus einem Selbstklebematerial, z.B. aus einem Selbstklebepapier. Die innere Schicht 16 besteht vorzugsweise aus einem silikonisierten Material, z.B. aus einem Silikonpapier, das auf dem Selbstklebematerial haftet. Wird Selbstklebepapier verwendet, so ist es natürlich beliebig bedruckbar. An einem anderen Endbereich 18 verjüngt sich der Umhüllungsteil 5 zunehmend zu der Lasche 8 hin (siehe Figur 1 und Figur 3) und weist im Bereich derselben den Freilassbereich 14 auf, eine Stelle, an der das silikonisierte Material, bzw. die innere Schicht 16, fehlt.

Die Verschlussbänder 6, 7 weisen an ihren Rändern im zweiten Teilbereich 13, der auf dem jeweiligen Seitenflansch 3, 4 aufliegt, eine gerade, gezackte oder gewellte Form auf. Die entsprechende Form hängt vom jeweils gewählten Material ab. Die Formgebung soll ein faltenfreies Aufliegen der Verschlussbänder 6, 7 auf den jeweiligen Seitenflanschen 3, 4 begünstigen. Dies kann besonders bei eng tolerierten Filmkassetten das Einsetzen und Abrollen der Spulen erheblich erleichtern, da keine unnötige Reibung wegen Faltenbildung entsteht.

Die Verschlussbänder 6, 7 werden auf der ummantelten Spule im Kantenbereich zwischen dem Umhüllungsteil 5 und den Seitenflanschen 3, 4 in einem einzigen Arbeitsgang aufgebracht. Vor dem Aufbringen werden die Verschlussbänder 6, 7 elastisch gedehnt. Die ersten Teilbereiche 12 der Verschlussbänder 6, 7 werden in elastisch gedehntem Zustand auf dem Umhüllungsteil 5 befestigt, beispielsweise durch Kleben. Die ebenfalls elastisch gedehnten zweiten Teilbereiche 13 werden auf die jeweiligen Seitenflanschen 3, 4 aufgelegt. Dabei können die zweiten Teilbereiche 13 mit einer leicht lösbaren Haftklebeschicht auf den Seitenflanschen 3, 4 befestigt werden. Eine Haftklebebeschichtung der zweiten Teilbereiche 13 ist jedoch nicht unbedingt notwendig, da das gedehnte Material der Verschlussbänder mit seiner Rückstellkraft an den Rändern der Seitenflanschen 3, 4 eine formschlüssige Verbindung eingeht, wobei die auftretenden Adhäsionskräfte zwischen den Verschlussbändern 6, 7 und den Seitenflanschen 3, 4 einen lichtdichten und veschiebungssicheren Abschluss bilden. Das Aufbringen der Verschlussbänder 6, 7 in gedehntem Zustand bewirkt, dass diese in den zweiten Teilbereichen 13 praktisch faltenfrei aufliegen, da die Rückstellkräfte weitgehend verhindern, dass Falten überhaupt auftreten.

Die Verschlussbänder 6, 7 bestehen, wie bereits erwähnt, aus einem flexiblen Material das elastisch dehnbar ist. Dazu kann beispielsweise Polyäthylen (PE) verwendet werden. Die Verschlussbänder 6, 7 sind ausserdem vorteilhaft so dünn und flexibel, dass sie mühelos mitsamt dem Umhüllungsteil 5 aus dem Auslass- bzw. Führungsschlitz der Filmkassette gezogen werden können. Die beim Aufbringen angewendete Dehnung der Verschlussbänder 6, 7 liegt vorzugsweise im Bereich von 5 bis 15 %. Geeignete Kombinationen von Elastizitätseigenschaften bei elastisch dehnbaren Materialien und angewendeter Dehnung liegen vorzugsweise in einem Bereich, der lediglich etwa 10 % bleibende Formänderung gestattet.

Wird eine Spule 1 mit lichtempfindlichem Material, die nicht mit Schwächungslinien 9 auf dem Umhüllungsteil 5 (vgl. Fig. 3) versehen ist, an der Lasche 8 aufgerissen, so genügt diese Kraft, um die Verschlussbänder 6, 7, die nur leicht haften oder von Adhäsionskräften gehalten sind zu lösen und mitsamt dem Umhüllungsteil 5 abzuziehen. Da die Verschlussbänder 6, 7 nicht abreissbar mit dem Umhüllungsteil 5 verbunden sind, bleiben keine Verschlussbandteile an der Spule oder in der Filmkassette zurück. Da der Umhüllungsteil 5 mit den Verschlussbändern 6, 7 in der Breite zwar die Breite des Auslass- bzw. Führungsschlitzes der Filmkassette überragt, die Verschlussbänder 6, 7 jedoch dünn und leicht verformt sind, lässt sich der Umhüllungsteil mit den Verschlussbändern 6, 7 auch leicht in den Führungsschlitz einführen und durchziehen.

Wird hingegen eine Spule 1 mit lichtempfindlichem Material, die mit Schwächungslinien 9 auf dem Umhüllungsteil 5 (vgl. Fig. 3) versehen ist, an der Lasche 8 aufgerissen, so erleichtern die weiteren Schwächungslinien 10 das Einreissen der Verschlussbänder 6, 7, und die in Umfangrichtung verlaufenden Schwächungslinien 9 gewährleisten die kontrollierte Auftrennung der lichtundurchlässigen Ummantelung. Beim Abziehen des Umhüllungsteils 5 von der Spule 1 werden die Ränder der an den Seitenflanschen 3, 4 zurückbleibenden Verschlussbandteile 6, 7 radial von der Spule 1 weggebogen und bleiben wegen der Ueberdehnung hernach plastisch verformt in dieser Lage. Sie stören somit das weitere Abspulen des lichtempfindlichen Materials nicht mehr. Dies ist von Bedeutung, da die photographischen Eigenschaften von Filmen oder anderem lichtempfindlichem Material durch abgestreifte Klebemittelrückstände beeinträchtigt werden können, was auf diese Weise weitgehend verhindert wird. Selbstverständlich können auch Verschlussbänder 6, 7 verwendet werden bei denen in der unmittelbaren Umgebung der Schwächungslinie 9 kein Klebstoff aufgetragen ist.

Die Verschlussbänder 6, 7 können, wie bereits erwähnt, aufgeklebt sein, es sind jedoch auch andere Befestigungsarten anwendbar, beispielsweise Punktschweissen oder ähnliche Verfahren, sofern die Verschlussbänder 6, 7 wie auch der Umhüllungsteil 5 aus dazu geeigneten Materialien bestehen.

Eine zweite Ausführung der Erfindung ist in den Zeichnungsfiguren 5 und 6 dargestellt. Im Vergleich mit der Figur 2 ist insbesondere ersichtlich, dass auf den Seitenflanschen 3, 4 zusätzlich kreisförmige Seitenringe 21, 22 angeordnet sind. Diese Seitenringe 21, 22 bestehen vorzugsweise aus Polyäthylen (PE) und sind mit einem schwachen Haftkleber versehen. Die Verschlussbänder 6, 7, die nur leichthaftend oder von Adhäsionskräften an den Seitenflanschen 3, 4 befestigt sind, sind vondiesen leicht haftenden Seitenringen 21, 22 überdeckt.

Mittels diesen Seitenringen 21, 22 lässt sich ein sogenanntes Teleskopieren der fertigen Spule, d.h. ein seitliches Verschieben der obersten Windungen des lichtempfindlichen Materials verhindern. Ein solches seitliches Verschieben könnte ein seitliches Ausbiegen der Verschlussbänder 6, 7 und damit einen Lichteinfall verhindern.

## Patentansprüche

1. Lichtundurchlässige Spule (1) mit einem lichtundurchlässigen Spulenkern (2) und beidseits desselben angeordnete Seitenflansche (3,4), auf welchem Spulenkern (2) eine lichtempfindliche Materialbahn (11) aufgewickelt ist, mit einem lichtundurchlässigen Umhüllungsteil (5), dessen Breitenmass mindestens annähernd gleich dem Breitenmass der Materialbahn (11) ist, die Materialbahn umhüllt und bei einem Endbereich (17) mit der lichtempfindlichen Materialbahn (11) verbunden ist, mit lichtundurchlässigen Verschlussbändern (6, 7) aus einem flexiblen Material, die jeweils eine lichtundurchlässige Ueberbrückung zwischen einem der Seitenflansche und dem Umhüllungsteil (5) bilden, wobei jedes Verschlussband (6, 7) bei einem ersten Teilbereich (12) in einem elastisch gedehnten Zustand lichtdicht auf dem Umhüllungsteil (5) aufliegt und nicht abreissbar mit demselben verbunden ist und bei einem zweiten Teilbereich (13) auf einem der Seitenflansche lichtdicht aufliegt, dadurch gekennzeichnet, dass die Seitenflansche (3, 4) ringförmig ausgebildet sind und mittels einem Klebstoff mit einer jeweiligen Stirnseite des Spulenkerns (2) verbunden sind.

2. Spule nach Anspruch 1, dadurch gekennzeichnet, dass jeder Seitenflansch (3, 4) aus einer lichtundurchlässigen Pappe besteht und der Klebstoff ein Hotmelt-Kleber ist.

3. Spule nach Anspruch 1 oder 2, dadurch gekennzeichnet, dass jeder Seitenflansch (3, 4) bei der dem Spulenkern (2) entgegengesetzten Seite eine Folien- oder Lackbeschichtung aufweist.

4. Spule nach einem der vorangehenden Ansprüche, dadurch gekennzeichnet, dass der Aussendurchmesser der ringförmigen Seitenflansche (3, 4) kleiner als der Aussendurchmesser der Spule (1) ist, und dass der Innendurchmesser der ringförmigen Seitenflansche (3, 4) grösser als der nach der ISO-Norm zugelassene obere Toleranzwert für den Innendurchmesser des Spulenkerns (2) ist.

5. Spule nach einem der vorangehenden Ansprüche, dadurch gekennzeichnet, dass der zweite Teilbereich (13) des Verschlussbandes (5) mit dem Seitenflansch (3, 4), beispielsweise durch Haftung mittels eines Klebers, oder durch Adhäsion verbunden ist.

6. Spule nach einem der vorangehenden Ansprüche, dadurch gekennzeichnet, dass der zweite Teilbereich (13) des Verschlussbandes (6, 7) nicht abreissbar mit dem jeweiligen Seitenflansch (3, 4) verbunden ist und jedes Verschlussband (6, 7) eine in einem Kantenbereich zwischen Umhüllungsteil (5) und Seitenflansch (3, 4) in Umfangrichtung verlaufende, als Sollreissstelle wirkende Schwächungslinie (9) aufweist und dass der erste und der zweite Teilbereich (12, 13) der Verschlussbänder (6, 7) entlang der Schwächungslinie (9) voneinander trennbar sind, wenn der Umhüllungsteil (5) mit den ersten Teilbereichen (12) der Verschlussbänder (6, 7) von der Spule (1) abgezogen wird.

7. Spule nach einem der vorangehenden Ansprüche, dadurch gekennzeichnet, dass die Schwächungslinie (9) auf dem Umhüllungsteil (5) liegt.

8. Spule nach einem der vorangehenden Ansprüche, dadurch gekennzeichnet, dass die Schwächungslinie (9) auf dem Seitenflansch (3,4) liegt.

9. Spule nach einem der vorangehenden Ansprüche, dadurch gekennzeichnet, dass der zweite Teilbereich (13) im Bereich der Schwächungslinie (9) beim Abziehen des Umhüllungsteiles (5) plastisch verformbar ist, damit er sich beim Abziehen des Umhüllungsteiles (5) radial von der Spule (1) wegbiegt und somit das Abspulen des lichtempfindlichen Materiales (11) nicht stört.

10. Spule nach einem der vorangehenden Ansprüche, dadurch gekennzeichnet, dass die Verschlussbänder (6, 7) lichtundurchlässige Polyäthylenklebbänder sind, deren Haftfähigkeit im Bereich von 7-8 g/mm² liegt.

11. Spule nach einem der vorangehenden Ansprüche, dadurch gekennzeichnet, dass die Verschlussbänder (6, 7) so angebracht sind, dass die in Umfangrichtung verlaufenden Schwächungslinien (9) beidseits auf dem Umhüllungsteil (5) in der Nähe dessen Randes liegen.

12. Spule nach einem der vorangehenden Ansprüche, dadurch gekennzeichnet, dass die Verschlussbänder (6, 7) in den ersten Teilbereichen (12) als Sollreissstellen wirkende, schräg zu der in Umfangrichtung verlaufenden Schwächungslinie (9) verlaufende weitere Schwächungslinien (10) aufweisen, die den Beginn des Abziehens des Umhüllungsteiles (5) von der Spule (1) erleichtern.

13. Spule nach einem der vorangehenden Ansprüche, dadurch gekennzeichnet, dass die Verschlussbänder (6, 7) an ihren Rändern im zweiten Teilbereich (13) eine gezackte oder gewellte Form aufweisen, um eine im wesentlichen faltenfreie Haftung an den Seitenflanschen (3, 4) zu ermöglichen.

14. Spule nach einem der vorangehenden Ansprüche, dadurch gekennzeichnet, dass der Umhüllungsteil (5) ein aus einer inneren und einer äusseren Schicht (16, 15) bestehender Schichtverbund ist und dass die Befestigung des lichtempfindlichen Materials (11) zwischen der inneren und der äusseren Schicht (16, 15) erfolgt.

15. Spule nach einem der vorangehenden Ansprüche, dadurch gekennzeichnet, dass die äussere Schicht (15) ein Selbstklebematerial und die innere Schicht (16) ein silikonisiertes Material ist, wobei das silikonisierte Material auf dem Selbstklebematerial haftet.

16. Spule nach Anspruch 15, dadurch gekennzeichnet, dass zum genannten Endbereich (17) des Umhüllungsteiles (5) ein anderer Endbereich (18) vorgesehen ist, der sich vom erstgenannten Endbereich (17) zu einer Lasche (8) hin verjüngt, um die Führung des lichtempfindlichen Materiales (11) zu erleichtern, und dass im Bereich der Lasche (8) ein Freilassbereich (14) ohne silikonisiertes Material vorgesehen ist, damit der andere Endbereich (18) des Umhüllungsteiles (5) selbstklebend befestigbar ist.

17. Spule nach einem der vorangehenden Ansprüche, bei der die Verschlussbänder (6, 7) durch Adhäsion auf den Seitenflanschen (3, 4) aufliegend gehalten sind, dadurch gekennzeichnet, dass auf jedem Seitenflansch (3, 4) ein Seitenring (21, 22) angeordnet ist, der bei seinem äusseren Ringbereich ein jeweiliges Versclussband (6, 7) überlappt, um ein seitliches Verschieben derselben zu verhindern.

18. Verfahren zur Herstellung der Spule nach Anspruch 1, dadurch gekennzeichnet, dass die Seitenflansche (3, 4) entlang ihres Innenumfangsbereiches mit einer jeweiligen Stirnseite des Spulenkerns (2) stoffschlüssig verbunden werden, danach die Verschlussbänder (6, 7) zum Aufbringen im Kantenbereich zwischen Umhüllungsteil (5) und Seitenflanschen (3, 4) auf der mit dem Umhüllungsteil (5) ummantelten Spule (1) elastisch gedehnt werden, dass die elastisch gedehnten ersten Teilbereiche (12) der Verschlussbänder (6, 7) auf dem Umhüllungsteil (5) befestigt werden, und dass die zweiten Teilbereiche (13) der Verschlussbänder (6, 7) auf die jeweiligen Seitenflansche (3, 4) aufgelegt werden.

19. Verfahren nach Anspruch 18, dadurch gekennzeichnet, dass die Dehnung der Verschlussbänder (6, 7) im Bereich von bis 15 % liegt.
